Europäisches Patentamt

European Patent Office

Office européen des brevets

(19)

(11) Veröffentlichungsnummer : **0 378 066 B1**

(12) # EUROPÄISCHE PATENTSCHRIFT

(45) Veröffentlichungstag der Patentschrift :
**25.03.92 Patentblatt 92/13**

(51) Int. Cl.$^5$ : **B60B 39/04, B61C 15/10**

(21) Anmeldenummer : **89890306.7**

(22) Anmeldetag : **28.11.89**

(54) **Streugerät.**

(30) Priorität : **19.12.88 AT 3079/88**

(43) Veröffentlichungstag der Anmeldung :
**18.07.90 Patentblatt 90/29**

(45) Bekanntmachung des Hinweises auf die
Patenterteilung :
**25.03.92 Patentblatt 92/13**

(84) Benannte Vertragsstaaten :
**BE CH DE GB LI NL**

(56) Entgegenhaltungen :
**EP-A- 0 178 289
DE-A- 1 480 675
FR-A- 813 959
GB-A- 459 589
US-A- 2 016 419**

(73) Patentinhaber : **Goldmann, Norbert
Am Goldenen Acker 40
W-3257 Springe 2 (DE)**
Patentinhaber : **Bartling, Werner
Schafsweide 5
W-3210 Elze 1 (DE)**

(72) Erfinder : **Goldmann, Norbert
Am Goldenen Acker 40
W-3257 Springe 2 (DE)**
Erfinder : **Bartling, Werner
Schafsweide 5
W-3210 Elze 1 (DE)**

(74) Vertreter : **Köhler-Pavlik, Johann, Dipl.-Ing.
Margaretenplatz 5
A-1050 Wien (AT)**

EP 0 378 066 B1

# EP 0 378 066 B1

## Beschreibung

Die Erfindung betrifft ein Streugerät nach dem Oberbegriff des Patentanspruches 1. Das Streugerät ist zum Streuen bzw. Zerstäuben von Streugut, insbesondere von trockenem Sand oder anderen Antirutschmaterialien unmittelbar vor die Räder von Fahrzeugen, wie z.B. Schienenfahrzeugen oder Lastkraftwagen.

Aus der US-A-2 016 419 ist ein Streugerät dieser Art bekannt geworden. Bei diesem Streugerät ist als Verschlußelement ein Dosierkolben mit kegelförmiger Abschlußfläche vorgesehen, welcher in lotrechter Richtung gegen einen lotrechten Fluß des Sandgutes aus einer lotrechten Auslaßöffnung des Durchflußkanals bewegt wird. Diese Konstruktion hat den Nachteil, daß der Kolben beim Schließen den Druck der über ihm liegenden Sandsäule zu überwinden hat, wodurch ein hoher Energieaufwand erforderlich ist. Weiters umfließt der Sand den Kolben sowie dessen Führungs- und Betätigungselemente allseitig, sodaß der Sand zu den Dicht- und Führungselementen eindringen und Schwergängigkeit der Anordnung bishin zur Funktionsstörung verursachen kann. Die ringförmige Durchlaßöffnung erfordert eine relativ genaue Fertigung und Abstimmung von Kolben und Dichtfläche, wobei bereits geringe Abweichungen von der genauen Fluchtung der Öffnungs- bzw. Kolbenachse durch eingeklemmte Partikel des Sandgutes zu einer Verklemmung des Dosierkolbens führen kann.

Durch die DE-OS 34 10 409 ist ein Streugerät bekanntgeworden, bei welchem ein Sandbehälter in eine Einlaßöffnung einer druckluftbetriebenen Dosierpumpe lotrecht mündet, in welcher der Querschnitt der Einlaßöffnung durch die Umfangsfläche eines Kolbens steuerbar ist. Zum Austragen des Streugutes dient eine der Dosierpumpe nachgeschaltete Ejektordüse, welche das von der Dosierpumpe kommende Streugut durch ein Rohr vor die Räder eines Schienenfahrzeuges bläst.

Der Nachteil dieses Streugerätes liegt darin, daß der Kolben, um den Dosierzylinder zu schließen, den gesamten Querschnitt desselben überwinden muß. Darüber hinaus läuft der Kolben direkt im Materialstrom, was zu einer hohen Flächenreibung und schwieriger Betätigung führt. Bei der Vor- und Rückbewegung gelangt Sand an die Dicht- und Führungselemente und verursacht höhere Betätigungskräfte und höheren Verschleiß. Schließlich ist aufgrund der angewendeten Konstruktion nur ein pulsierender Austrag möglich, und es kann insbesondere bei geringen auszutragenden Sandmengen kein gleichmäßiger Strom des Streugutes erzeugt werden.

Aus der DE-OS 32 37 763 ist ein Streugerät bekannt, das eine mittels Hubmagneten betätigbare Dosierklappe im oberen Streugut-Zufuhrrotor und einen unmittelbaren Antrieb für eine ummantelte Wurfwalze in horizontaler Lage aufweist. Ferner ist bekannt, daß durch die Dosierklappe ein um 90° versetzter Einbau gegenüber dem Antriebsmotor bedingt ist. Die Wurfwalze, durch Rotorwelle, Kupplung und Motorwelle mit dem Antriebsmotor verbunden, ermöglicht ein konstantes Verstreuen des Streugutes aus der Austrittsöffnung.

Durch die EP-A-O 178 289 ist ein Streugerät bekannt geworden, bei welchem das Sperrorgan aus einem mittels Hubmagneten betätigbaren Dosierschieber besteht, und das Austragsorgan in Form eines rotierenden Elementes ausgebildet ist.

Klappen- und Schiebersteuerungen haben den Nachteil, daß sie störanfällig sind. Außerdem öffnen und schließen Klappen- und Schieberventile den Durchlaßquerschnitt des Zufuhrrohres für das Streugut nur allmählich bzw. fortschreitend, wodurch der Streugutzufluß zur Austragswalze zu Beginn und am Ende den Erfordernissen nicht entspricht. Darüber hinaus benötigt eine Klappe, da sie sich um einen Drehpunkt bewegt, zu ihrer Steuerung ein Gestänge, welches Ursache einer aufwendigen Konstruktion und Montage ist.

Aufgabe der vorliegenden Erfindung ist die Schaffung von Maßnahmen, durch welche unter Vermeidung der Nachteile der bekannten Streugeräte ein geringer Energieaufwand für die Betätigung des Verschlußelementes als auch des Austragsorgans erforderlich ist, und ein sparsamer und wirksamer Einsatz des Sandgutes ermöglicht wird. Außerdem soll ein wesentlich geringerer Verschleiß der Verschlußelemente und des Austragsorgans erzielt werden als es bei den bekannten Konstruktionen möglich war. Diese Aufgabe wird bei einem Streugerät der eingangs erwähnten Art durch die Maßnahmen nach dem kennzeichnenden Teil des Patentanspruches 1 gelöst.

Dadurch, daß die für den Sanddurchgang zu regelnde Öffnung an die Durchgangsöffnung des Kolbens anschließt, wird für das Verschieben des Kolbens weniger Energie benötigt als bei den bekannten Konstruktionen, bei welchen der Kolben beim Schließen der Öffnung den gesamten Querschnitt der Sandsäule zu überwinden hat. Insbesondere bei einer flachen und allenfalls schrägen Austrittsöffnung sind einerseits besonders kleine Kräfte für das Schließen des Kolbens erforderlich und andererseits wird trotz Schrägstellung der Öffnung ein lotrechter Materialfluß vorgesehen, der für bestimmte Zwecke diesen begünstigt. Das Streugut kann nicht zu den Führungs- und Dichtelementen des Kolbens gelangen, wodurch dessen Funktionssicherheit gewährleistet ist. Durch die Stirnfläche des Kolbens wird das Streugut auch in eine Richtung geleitet, welche der Bewegungsrichtung des Austragsorganes entspricht, wodurch einerseits ein geringerer Energieaufwand für dessen Betätigung und andererseits eine Herabsetzung des Verschleißes des Austragsorganes erreicht wird. Außer-

2

dem ist der Kolben in seiner Schließstellung keinem Druck des Streugutes ausgesetzt und in seiner Bewegung reibungsärmer als die bekannten Kolben, Schieber oder Klappen. Weiters ist zu erwähnen, daß auch ein sofortiges Öffnen des gesamten Durchflußquerschnittes der Streugutzufuhröffnung zu Beginn der Streugutförderung gesichert wird, wodurch deren Fluß, insbesondere bei grobkörnigem Gut, begünstigt wird. Schließlich ist auch eine platzsparende Montage und leichtere Abdichtung möglich.

Weitere Vorteile der Erfindung werden durch die Maßnahmen nach den Ansprüchen 2 bis 4 erzielt. Anhand der Zeichnungen werden drei Ausführungsbeispiele des erfindungsgemäßen Streugerätes näher erläutert.

Es zeigen

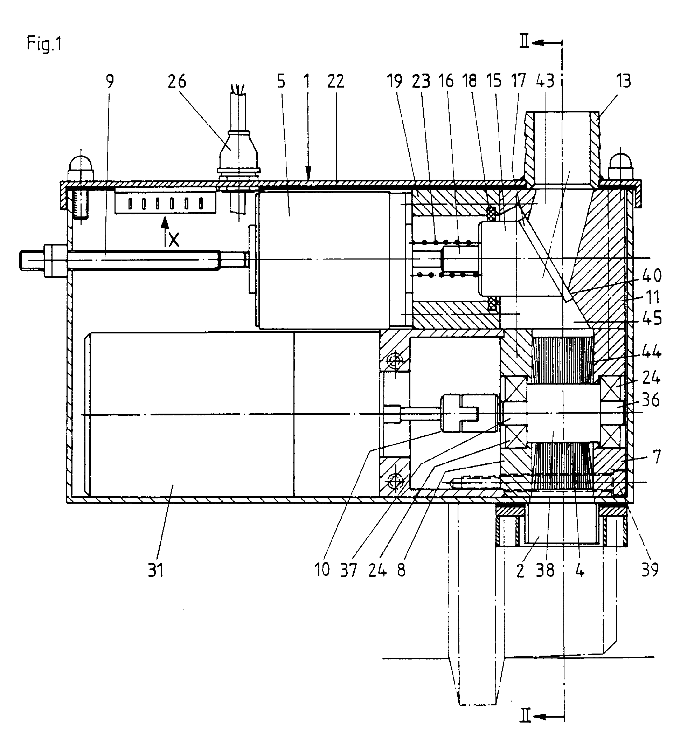

Fig. 1 einen Querschnitt einer ersten Ausführungsform des erfindungsgemäßen Streugerätes,

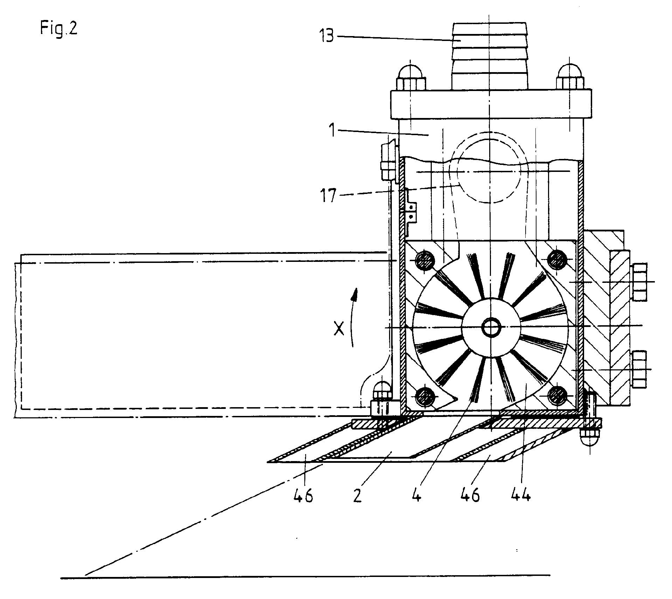

Fig. 2 einen Schnitt nach der Linie II-II der Fig. 1,

Fig. 3 den Querschnitt einer zweiten Ausführungsform des erfindungsgemäßen Streugerätes,

Fig. 4 den Querschnitt einer dritten Ausführungsform des Streugerätes,

Fig. 5 einen Schnitt nach der Linie V-V der Fig. 4 und

Fig. 6 eine Draufsicht des Streugerätes nach Fig. 4 bei abgehobenem Deckel.

In einen durch einen Deckel 22 abgeschlossenen Kasten 1 befindet sich ein aus einem Boden 8 und einem Deckel 7 bestehendes Gehäuse für ein als Bürstenwalze ausgebildetes Austragsorgan 4, welches mit den Zapfen 36, 37 seiner Rotorwelle 38 in staubdichten Lagern 24 gelagert ist und über eine elastische Kupplung 10 von einem Motor 31 angetrieben wird. Der Deckel 7 ist mittels Schrauben 39 an Boden 8 befestigt. Am Gehäuse 7, 8 für das Austragsorgan 4 sitzt ein Gehäuse 11 für eine Dosiereinrichtung, welche von einem Dosierkolben 15 gebildet ist, der über eine Hubstange 16 von einem Hubmagnet 5 betätigt wird, wobei eine Stellschraube 9 den Öffnungsweg des Dosierkolbens 15 begrenzt. Anstelle des Hubmagneten könnte auch eine hydraulische oder pneumatische Betätigung des Dosierkolbens 15 erfolgen oder der Dosierkolben 15 könnte, wie später als Ausführungsbeispiel beschrieben wird, über ein Spindelhubelement betätigt werden. Zwischen Hubmagnet 5 und Gehäuse 11 ist ein Distanzstück 19 vorgesehen. Der Hubmagnet 5 wird mit Strom über eine elektrische Zuleitung 26 versorgt. In der Schließstellung sitzt der Dosierkolben 15 über einem Dichtring 17 an einer schrägen, wie aus der Zeichnung ersichtlich, an die Durchtrittsöffnung des Dosierkolbens 15 anschließenden Dichtfläche 40 eines im Gehäuse 11 vorgesehenen Kanals 43 für die Zufuhr des Streugutes. An den Kanal 43 schließt ein Streugutzufuhrrohr 13 an, welches über einen elastischen Schlauch mit einem Vorratsbeshälter für das Streugut verbunden ist. Zwischen dem Austritt aus dem Kanal 43 und dem Eintritt in die Kammer 44 , in welcher sich das Austragsorgan 4 bewegt, ist ein Verwirbelungsraum 45 vorgesehen, um das Streugut aufzulockern. Zur Abdichtung des vom Streugut durchflossenen Raumes genenüber dem Geräteinneren ist im Bereiche des Dosierkolbens ein Abstreifer 18 bzw. eine Abdichtung vorgesehen. Der Dosierkolben 15 wird in seine Schließstellung durch eine Schließfeder 23 und in seine Offenstellung durch den Hubmagnet 5 entgegen der Kraft der genannten Schließfeder 23 gebracht.

Das vom Austragsorgan 4 aufgelockerte und energiebeladene Streugut wird durch einen tangential an die zylindrische Kammer 44 angeschlossenen Austragsstutzen 2 unmittelbar vor die Räder eines Schienenfahrzeuges oder eines Lastkraftwagens od. dgl. gebracht. An den Austragsstutzen schließt eine Heizung 46 an, um ein Vereisen des Streugutes zu verhindern.

Mit dem Pfeil X ist die Drehrichtung der Bürstenwalze 4 angedeutet.

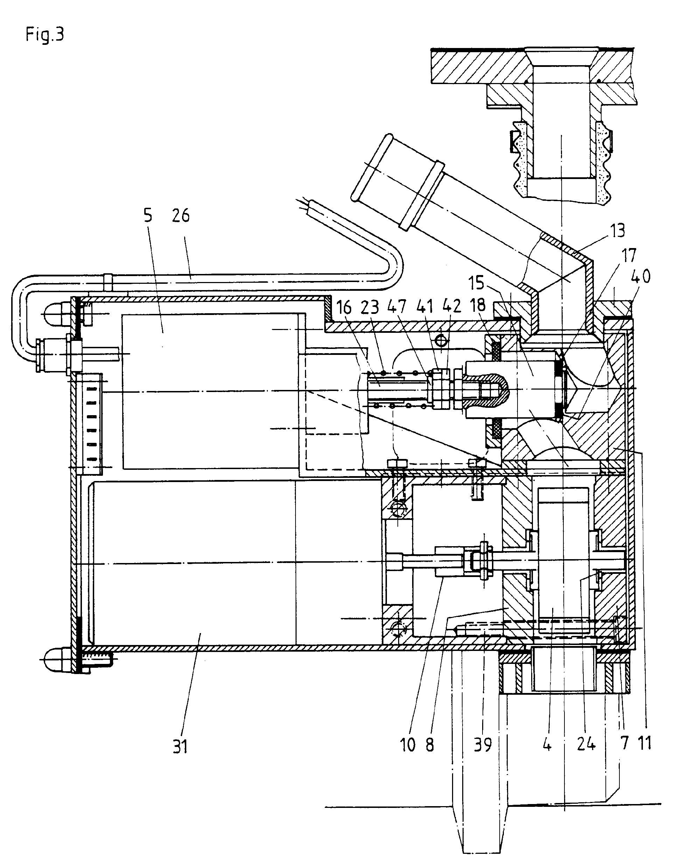

Die Ausführungsform des Streugerätes nach Fig. 3 unterscheidet sich von der zuvor beschrieben vor allem dadurch, daß die Dichtfläche 40 nicht schräg sondern lotrecht angeordnet ist, sodaß der Fluß des Streugutes abgewinkelt ist. Ein derartiger Fluß ist insbesondere für gut fließendes Streugut vorteilhaft. Bei diesem Ausführungsbeispiel ist anstelle der Stellschraube 9 die Hubstange 16, zumindest in ihrem an den Dosierkolben 15 anschließenden Teil, mit einem Gewinde versehen, auf welchem eine Stellmutter 41 bis zu einem Anschlag 47 verdrehbar ist und die Vorspannung der Schließfeder 23 steuert. Der Hubmagnet 5 kann den Dosierkolben 15 so weit gegen die Kraft der Feder 23 öffnen, bis die Stellmutter 41 die Schließfeder 23 zu einem Block zusammengedrückt hat. Die Mutter 42 dient als Sicherungsmutter. Die übrigen Teile dieses Streugerätes entsprechen im wesentlichen den Teilen des zuvor beschriebenen Streugerätes und sind mit den gleichen Bezugsziffern versehen.

Selbstverständlich kann auch bei dieser Kolbensteuerung eine schräge Anordnung der Dichtfläche 40, wie bei der früheren Ausführungsform des Streugerätes, vorhanden sein.

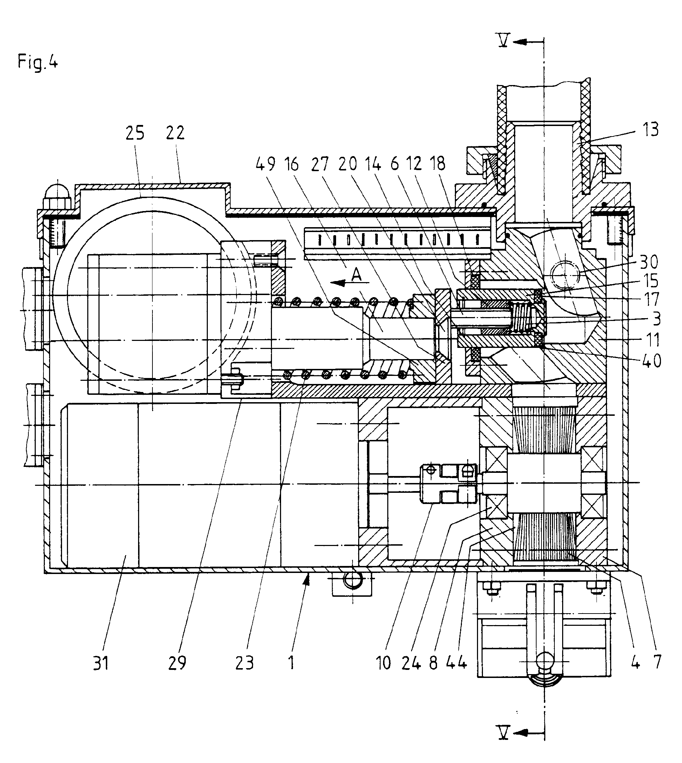

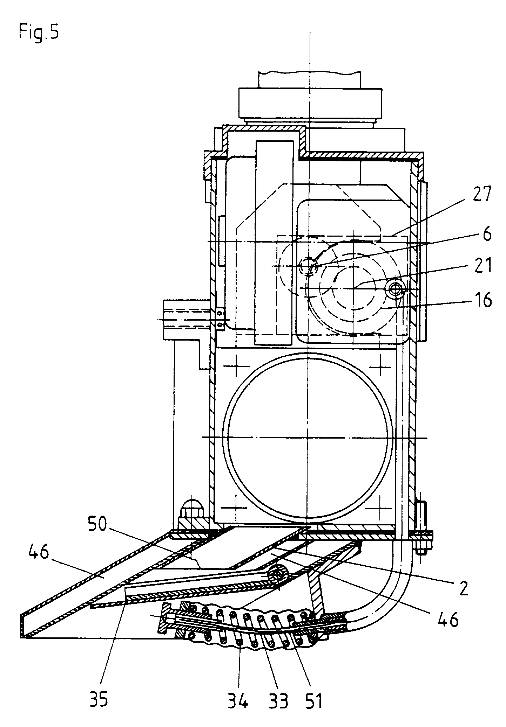

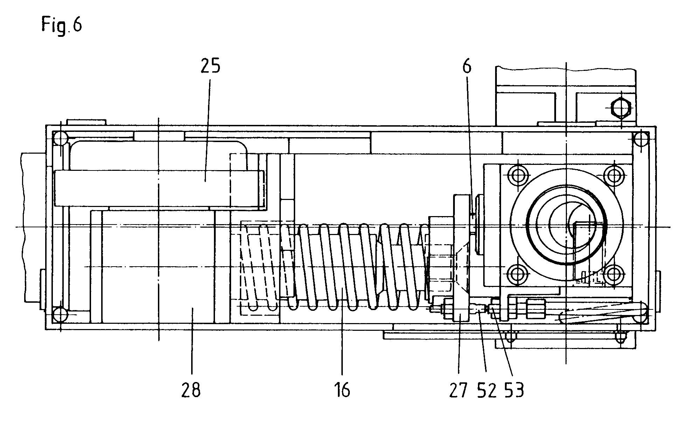

Bei der Konstruktion des Streugerätes nach den Fig. 4 - 6 ist wiederum eine lotrechte Anordnung der Dichtfläche vorgesehen, die aber, wie bereits beim vorangehenden Ausführungsbeispiel erwähnt wurde, schräg gelegen sein kann. Beim gegenständlichen Streugerät ist im Dosierkolben 15 konzentrisch ein innerer Kolben 12 vorgesehen, welcher auf einem mittigen Gewindebolzen 6 aufgeschraubt ist und mit seinem stirnseitigen Ende an einer sich am Boden des Dosierkolbens 15 abstützenden Feder 3 abstützt, welche die Tendenz hat, den Kolben 12 gegen einen Sicherungsring 14 zu drücken, welcher auch den Hub des Kolbens 12 begrenzt. Der Gewindebolzen 6 ist mit seinem aus dem Dosierkolben 15 an seinem der Dichtfläche 40 abgekehrten Ende hinausragenden Ende an einer Platte 27 befestigt, die ihrerseits mittels einer Schraube 20 an der Hubstange 16, wie Fig. 5 zeigt, exzentrisch befestigt ist, auf welcher im Anschluß an die Platte 27 ein Zentrierring 49 sitzt, der mit der Platte 27 verschraubt ist. Am Zentrierring 49 stützt sich die Schließfeder 23 mit ihrem einen Ende ab.

Zum Antrieb der Hubstange 16 dient ein Scheibenläufermotor 25, welcher ein Schneckengetriebe antriebt, das sich in einem Getriebekasten 28 befindet, an welchem allenfalls unter Zwischenschaltung eines Distanzstückes 29 die Schließfeder 23 mit ihrem dem Zentrierring 49 abgekehrten Ende abgestützt ist. Das Schneckengetriebe treibt die Hubstange 16 in der Richtung der Öffnung des Dosierkolbens 15 an, wobei zwischen Motor 25 und Getriebe eine Rutschkupplung oder ein Freilauf vorgesehen ist, um zu erreichen, daß der Motor in der Endlage des Kolbens in der Offenstellung zum Stillstand kommen muß. Es wäre aber auch theoretisch möglich, eine Bremse einzubauen, um den Kolben in der Offenstellung zu halten, was aber den Nachteil hätte, daß zum Schließen des Kolbens die Bremse gelöst werden müßte, was einen höheren Aufwand in der Konstruktion bedeuten würde.

Wie Fig. 5 zeigt, ist die Mittelachse 21 der Hubstange 16 gegenüber der Drehachse der Bürstenwalze 4 oberhalb derselben horizontal und die Mittelachse des Gewindebolzens 6 in der durch die genannte Drehachse geführten lotrechten Ebene gegenüber der Mittelachse 21 nach oben versetzt angeordnet, um einen platzsparenden Einbau des Antriebsmechanismus des Dosierkolbens 15 im Kasten 1 zu erreichen.

Die Austrittsöffnung 50 des Austragsstutzens 2 ist beim Stillstand des Streugerätes durch eine Klappe 35 verschlossen, welche an einem Bowdenzug 33 angeschlossen ist, von welchem das von einer Feder 34 umschlossene Seil an der Platte 27 befestigt ist.

Die Durchflußmenge des Streugutes im Durchflußkanal vor dem Dosierkolben 15 kann durch eine Schraube 30 geregelt werden.

Um den Dosierkolben 15 zu öffnen, wird die Hubstange 16 durch den Scheibenläufermotor 25 über das Getriebe in der Richtung des Pfeiles A bewegt. Am Anfang dieser Bewegung nimmt die Platte 27 über den Gewindebolzen 6 den Kolben 12 mit, wobei die Feder 3 den Dosierkolben 15 während dieser Bewegung in der Schließstellung hält. Hierbei zieht die Platte 27 das Seil 51 des Bowdenzuges 33 entgegen der Kraft der Feder 34 und verschwenkt dabei die Klappe 35, sodaß der Austragstutzen 2 für die nachfolgende Sandstreuung geöffnet wird. Sobald der Kolben 12 am Sicherungsring 14 angestoßen ist, nimmt er den Dosierkolben 15 mit und entfernt ihn von der Dichtfläche 40, sodaß das Streugut zum Austragsorgan 4 gelangen kann.

Soll der Dosierkolben 15 geschlossen werden, wird der Motor 25 abgestellt, sodaß die Feder 23 infolge der zwischen Motor und Getriebe angeordneten Rutschkupplung oder Freilauf die Mitnehmerplatte 23 entgegen der Richtung des Pfeiles A bewegen kann. Hiebei wird vorerst die Feder 34 des Bowdenzuges 33 entspannt, sodaß die Klappe 35 den Austragsstutzen 2 zu schließen beginnt. Mit dem Kolben 12 bewegt sich auch unter der Kraft der Feder 3 der Kolben 15. Hiebei wird aber der Kolben 15 mit seinem Dichtring 17 an der Dichtfläche 40 bereits anliegen, wenn sich der Kolben 12 vom Sicherungsring 14 zu entfernen beginnt. Dabei kann das nach dem Anliegen des Dosierkolbens 15 auf der Dichtfläche 40 in der Bürstenwalze 4 noch vorhandene Streugut durch den noch teilweise offenen Austragsstutzen 2 ausfließen. In der weiteren Folge wird die Hubstange 16 über die Platte 27 und den Gewindebolzen 6 den Kolben 12 gegen die Kraft der Feder 3 drücken, bis die Platte bzw. ihr Anschlag 52 am Gegenanschlag 53 angestoßen ist. In dieser Stellung der Platte 27 ist die Klappe 35 geschlossen, wobei das Streugut inzwischen aus der Bürstenwalze 4 hinausgeschleudert wurde.

**Patentansprüche**

1. Streugerät mit einer Dosiereinrichtung und einem Austragsorgan, wobei die Dosiereinrichtung ein Verschlußelement in Form eines motorisch, elektromagnetisch oder hydraulisch linear bewegten, einen Durchflußkanal (43) des Streugutes mit seiner Stirnfläche abschließenden Dosierkolbens (15) aufweist, dessen Stirnfläche als flache Anlage- bzw. Dichtfläche ausgebildet ist, die in der Schließstellung des Dosierkolbens (15) mit einer parallelen Gegenfläche (43) des Zuflußkanals (43) zusammenwirkt, dadurch gekennzeichnet, daß das Austragsorgan in Form eines rotierenden Elementes, vorzugsweise einer Bürstenwalze, ausgebildet ist, daß der Dosierkolben (15) horizontal bewegt wird und seine Stirnfläche flach ausgebildet ist, welche eine gegenüberliegende schräge oder Lotrechte Ausflußöffnung des Durchflußkanals (43) für das Streugut abschließt.

2. Streugerät nach Anspruch 1, dadurch gekennzeichnet, daß der Dosierkolben (15) mit der Hubstange (16) über einen zweiten Kolben (12) verbunden ist, welcher im Dosierkolben (15) längsverschieblich gelagert ist und an einer Feder (3) abgestützt ist, welche sich am der Dichtfläche (40) zugekehrten Kolbenboden abstützt, wobei der Hub des zweiten Kolbens (12) an dem der Dichtfläche (40) abgekehrten Ende des Dosierkolbens (15) begrenzt ist, und der zweite Kolben (12) oder die Hubstange (16) oder ein den Kolben (12) mit der Hubstange (16) verbindendes Glied (27) an einen Bowdenzug angeschlossen ist, welcher an eine den Austragsstutzen (2) schließende Klappe (35) angeschlossen ist, sodaß die Klappe (35) den Austragsstutzen erst später schließt als der Dosierkolben (15) den Durchströmkanal der Dosiereinrichtung, jedoch früher öffnet als der Dosierkolben (15) den Durchströmkanal.

3. Streugerät nach Anspruch 2, dadurch gekennzeichnet, daß die Hubstange (16) mit dem im Dosierkolben (15) befindlichen zweiten Kolben (12) über eine Mitnehmerplatte (27) und einen Bolzen (6) verbunden ist, welcher den zweiten Kolben (12) trägt und an der Mütnehmerplatte (27) exzentrisch gelagert ist, wobei die Mütnehmerplatte in entgegengesetzter Richtung exzentrisch zur lotrechten Mittelebene des Austragsorgans (4) angeordnet ist.

4. Streugerät nach Anspruch 3, dadurch gekennzeichnet, daß die Mittelachse des Bolzens (6) in der lotrechten Mittelebene der Drehachse des rotierenden Austragsorgans (4)gelegen ist.

## Claims

1. A dispersion device with a metering device and a delivery element, the metering device comprising a sealing element in the form of a metering piston (15), which is linearly displaced electromagnetically, hydraulically or by a motor, seals a through flow duct (43) for the dispersion material with its end face designed as a flat abutment or sealing surface cooperating in the closed position of the metering piston (15) with a parallel counter surface (40) of the inflow duct (43), characterised in that the delivery element is designed in the form of a rotating element, preferably a brush roller, the metering piston (15) is displaced horizontally and its end face is flat and seals an oppositely arranged inclined or vertical outflow opening of the through flow duct (43) for the dispersion material.

2. A dispersion device according to claim 1, characterised in that the metering piston (15) is connected with the piston rod (16) via a second piston (12), which is mounted in the metering piston (15) so as to be longitudinally displaceable and is supported against a spring (3), which is supported against the piston base facing the sealing surface (40), the stroke of the second piston being defined at the end of the metering piston (15) remote from the sealing surface (40), and the second piston (12) or the piston rod (16) or a member (27) connecting the piston (12) with the piston rod (16) being connected to a Bowden wire, which is connected to a flap (85) closing the delivery socket (2), so that the flap (35) closes the delivery socket only after the metering piston (15) closes the through flow duct of the metering device, but opens before the metering piston (15) opens the through flow duct.

3. A dispersion device according to claim 2, characterised in that the piston rod (16) is connected with the second piston (12) arranged in the metering piston (1) via a carrier plate (27) and a bolt (6), which supports the second piston (12) and is eccentrically mounted on the carrier plate (27), the carrier plate being arranged eccentric to the vertical central plane of the delivery element (4) in the opposite direct ion.

4. A dispersion device according to claim 3, characterised in that the central axis of the bolt (6) is arranged in the vertical central plane of the axis of rotation of the rotating delivery element (4).

## Revendications

1. Appareil de sablage comprenant un dispositif de dosage et un organe de déversement, le dispositif de dosage présentant un élément de fermeture en forme d'un piston de dosage (15) actionné de façon linéaire par un organe moteur, électro-magnétique ou hydraulique, et fermant par sa face frontale un conduit d'écoulement (43) de la matière de sablage, piston de dosage, dont la face frontale est réalisée en tant que face plane d'appui ou d'étanchéité, qui, en position de fermeture du piston de dosage (15), coopère avec une contre-face parallèle (40) du conduit d'amenée (43), caractérisé en ce que l'organe de déversement est réalisé pour avoir la forme d'un élément rotatif, de préférence d'un balai rotatif, en ce que le piston de dosage (15) est déplacé horizontalement et que sa face frontale est réalisée de façon plane, et qui ferme une ouverture d'écoulement opposée, oblique ou verticale, du conduit d'écoulement (43) de la matière de sablage.

2. Appareil de sablage suivant la revendication 1, caractérisé en ce que le piston de dosage (15) est relié à la tige (16) par l'intermédiaire d'un deuxième piston (12), qui est placé dans le piston de dosage (15) de façon à coulisser longitudinalement et qui prend appui sur un ressort (3) qui est supporté sur le fond de piston tourné vers la face d'étanchéité (40), la course du deuxième piston (12) étant limitée par l'extrémité du piston de dosage (15) dégagée de la face d'étanchéité (40), et en ce que le deuxième piston (12) ou la tige (16) ou un organe (27) reliant le piston (12) à la tige (16) est fixé à un câble Bowden qui est raccordé à un clapet (35) obturant le tuyau de déversement (2), de sorte que le clapet (35) obture le tuyau de déversement seulement après que le piston de dosage (15) ait fermé le conduit d'écoulement de l'appareil de dosage, cependant ce clapet ouvre le conduit avant que le piston de dosage (15) n'ait ouvert le conduit d'écoulement.

3. Appareil de sablage suivant la revendication 2, caractérisé en ce que la tige (16) est reliée au deuxième piston (12) se trouvant dans le piston de dosage (15), par l'intermédiaire d'une plaque d'entraînement (27) et d'un axe (6) qui porte le deuxième piston (12) et qui est montée de façon excentrée sur la plaque d'entraînement (27), celle-ci étant disposée dans le sens opposée de façon excentrée par rapport au plan médian vertical de l'organe de déversement (4).

4. Appareil de sablage suivant la revendication 3, caractérisé en ce que l'axe médian de l'axe (6) est situé dans le plan médian vertical de l'axe de rotation de l'organe rotatif de déversement (4).

Fig.1

Fig.2

Fig.3

Fig.4

Fig.5

Fig.6

25

6

28

16

27 52 53